# EUROPEAN PATENT APPLICATION

(11) **EP 1 609 926 A2**
(43) Date of publication of application: **28.12.2005**
(21) Application number: 05105448.4
(22) Date of filing: 21.06.2005
(51) Int. Cl.: E04F 10/06

(54) **Hinge device for awning arms or the like**

(30) Priority: 24.06.2004 ES 200401549 U
(71) Applicant: Producciones Mitjavila, S.A., 17730 Llers (FR)
(72) Inventor: Mitjavila, Raymond, 66600, RIVESALTES (FR)
(74) Representative: Ponti Sales, Adelaida

(57) **Abstract**

A hinge device (5) for awning (11) arms (6) or the like, comprising a pin (1) located between an end of the arm (6) and a fixed support (7), and means for fixing the position of the pin (1) with respect to the support (7). The hinge device is characterized in that said pin (1) comprises, at one of its ends, a narrower eccentric portion (2) with respect to the axis of said pin (1) screwed to a sleeve (3).

## Description

The present invention relates to a hinge device for awning arms or the like.

### BACKGROUND OF THE INVENTION

Certain types of awnings comprise hinged arms which function is extending the fabric of the awning and tightening it. Said arms are usually hinged to supports which are fixed to a wall or roof by means of bolts or transversal pins. This allows the arms pivoting free.

Due to the loads present at the end of the arm, the arm is bent by the torque generated by its own weight and other external events, as, for example, the wind. This problem is increased when the arms have a considerable length, which causes that the arms are visible even when the awning is rolled up.

To avoid this drawback a hinge device has been designed which consists in a pin which has an eccentric widened part at one of its ends which is housed in one of the orifices of the arm. Thus, the pin can rotate free, and, due to said eccentric widened part, it varies its position with respect to the arm. Once the pin is arranged at the more convenient inclination angle, it is fixed to the arm tightening it by means of a small screw which presses against the eccentric widened part.

Thus, the downwards inclination of the arm of the awning is corrected as it is rolled up, due to the inclination of the pin.

However, this device has the drawback that it is necessary to manufacture one end of an arm or a support different to the usual ones in order to allow them receiving the widened part of said pin. Moreover, an orifice has to be mechanized for receiving the screw which fixes the pin.

On the other hand, the operation of fixing the pin can be complex, as it is not easy to find the appropriate position for each condition, as there are not preset positions.

### DESCRIPTION OF THE INVENTION

The aim of the present invention is to solve the disadvantages of the devices known in the art, providing a hinge device for awning arms or the like, comprising a pin located between an end of the arm and a fixed support, and means for fixing the position of the pin with respect to the support, characterized in that said pin comprises, at one of its ends, a narrower eccentric portion with respect to the axis of said pin screwed to a sleeve.

Therefore, thanks to the eccentric portion of the pin, the device allows that the arms of the awning are perfectly folded back when it is rolled up. The device of the invention can be used in conventional awning arms, without having to make orifices of different size for the pin. Assembling is also easier, as it is not necessary to carry out any other type of work in the arm or use accessory means for retaining the pin at the desired position.

Preferably, the means for fixing the position of the pin comprise a first widened part located at the other end of the pin, and a second widened part located at one of the ends of the sleeve, in such a way that both widened parts get closer when the sleeve is screwed to the pin.

Said widened parts press against the arm or the support when the sleeve is screwed to the pin.

Advantageously, the first widened part comprises a nut which is housed inside a slot made in the support.

According to an embodiment of the present invention, the first widened part is a nut which is housed inside a slot made in the end of the arm.

Due to this slot, the nut-shaped widened part is blocked inside it in the desired position, in such a way that the inclination of the pin can easily be set among one of the six positions defined by each side of the nut.

According to another embodiment, the second widened part is a nut. Thus, a conventional key can be used to tighten or loosen the sleeve to the pin.

### BRIEF DESCRIPTION OF THE DRAWINGS

In order to assist the description of all that has been outlined above some drawings are attached which show schematically and solely by way of non-restrictive example a practical case of embodiment of the device of the invention, in which:
Figures 1 and 2 are views of the pin and the sleeve of the device of the invention;
Figure 3 in a schematic elevation view of the device of the invention;
Figure 4 is another schematic elevation view of the device of the invention;
Figure 5 is a partial perspective view of an awning and the device of the invention, in the unrolled position;
Figure 6 is a front elevation view of the awning in the rolled-up position, and the position adopted by the arms.

### DESCRIPTION OF A PREFERRED EMBODIMENT

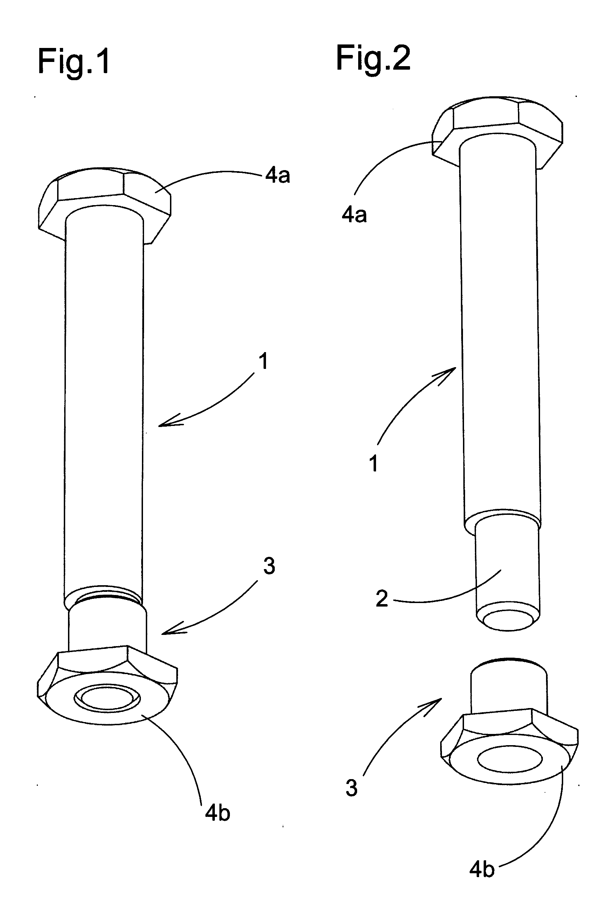

The pin 1 represented in figures 1 and 2 comprises a threaded portion 2 at one of its ends, which is situated in an eccentric position, displaced with respect to the axis of the pin 1.

In said figures, there is also shown a sleeve 3 with an inner thread which is screwed to the portion 2 of the pin 1.

The pin 1 and the sleeve 3 have at its ends nut-shaped widened parts, 4a, 4b, respectively.

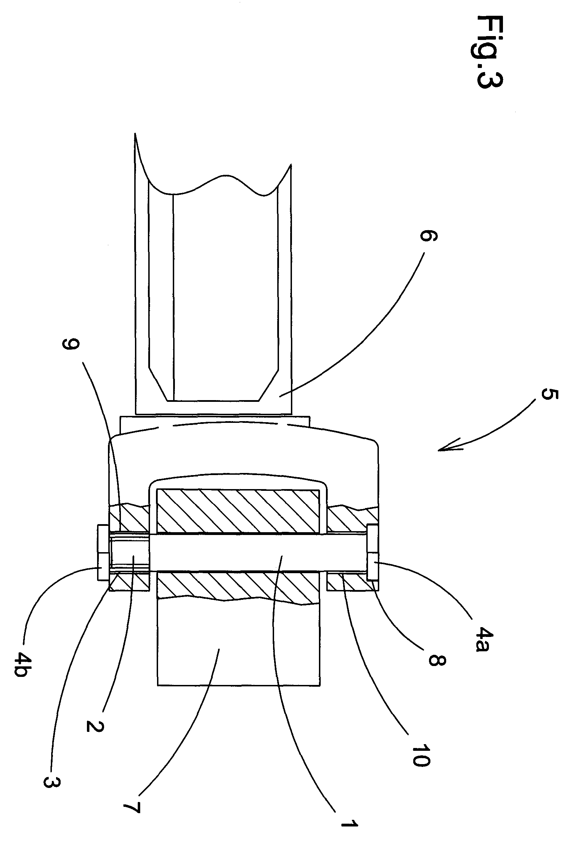

Figure 3 also shows a view of the hinge device 5 of the invention. The pin 1 and the sleeve 3 are screwed, attaching the arm 6 of an awning to a fixed support 7. The sleeve 3 is introduced inside one of the orifices 9 of the arm 6, and the nut-shaped widened part 4a of the pin 1 is housed inside a slot 8 on the other side of the arm 6.

The pin 1 passes through an orifice made in the support 7. Both widened parts 4a, 4b retain the position of the pin 1 with respect to the support 7 longitudinally, preventing the pin 1 from falling out of the orifice.

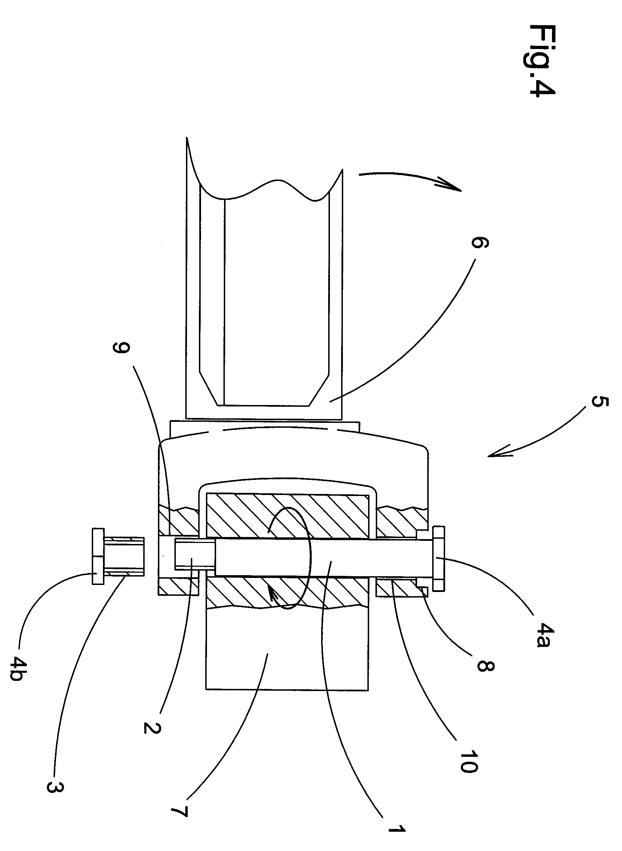

As shown in figure 4, to adjust the inclination of the pin 1, the sleeve 3 has to be unscrewed from it, so that the widened part 4a can be separated from the slot 8 and introduced again in any of the six positions of the nut.

As it can be appreciated, due to the eccentric portion 2, the pin is slightly displaced in a given direction from the axis defined by the two orifices 9, 10 of the arm 6, depending on the angle rotated.

Once the pin 1 has been positioned in the more suitable position, it is screwed again to the sleeve 3. Thus, the widened part 4a of the pin 1 is fitted again inside the slot 8 of the arm 6.

As shown, the arm 6 is slightly inclined upwards if the pin 1 is positioned in the position shown in figure 4.

For a correct operation of the device, certain play is necessary between the orifices 9, 10 of the arm 6 of the awning and the sleeve 3 and the pin 1.

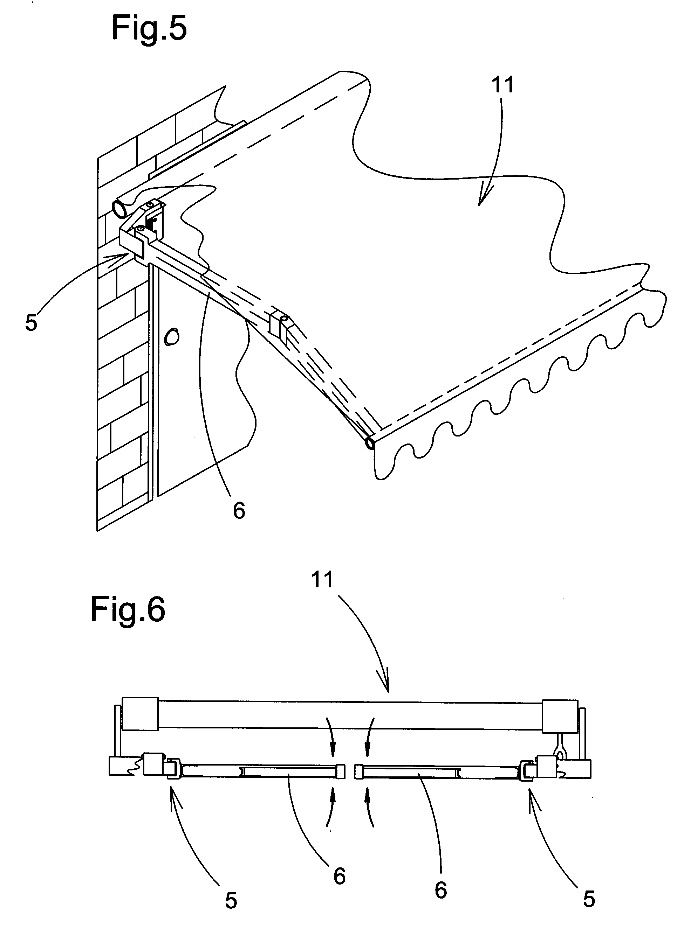

In figures 5 and 6 a roll-up awning 11 is shown with its arms 6 and the device 5 of the invention, in open and rolled-up position. Figure 6 also shows the movement of the arms 6 carried out by the device 5 in the rolled-up position, so that the arms are better folded back and they take less space.

Although in the shown embodiment the support is placed between two ends of the arm 6, the device may also operate in the same way for an arm placed between two ends of a support, in this case, the slot 8 would be located in the support.

## Claims

1. Hinge device (5) for awning (11) arms (6) or the like, comprising a pin (1) located between an end of the arm (6) and a fixed support (7), and means for fixing the position of the pin (1) with respect to the support (7), **characterized in that** said pin (1) comprises, at one of its ends, a narrower eccentric portion (2) with respect to the axis of said pin (1) screwed to a sleeve (3).

2. Device (5), according to claim 1, **characterized in that** the means for fixing the position of the pin (1) comprise a first widened part (4a) located at the other end of the pin (1), and a second widened part (4b) located at one of the ends of the sleeve (3), in such a way that both widened parts get closer when the sleeve (3) is screwed to the pin (1).

3. Device (5), according to claim 2, **characterized in that** the first widened part (4a) is a nut, which is housed inside a slot made in the support (7).

4. Device (5), according to claim 2, **characterized in that** the first widened part (4a) is a nut, which is housed inside a slot (8) made in the end of the arm (6).

5. Device (5), according to claims 2 or 3, **characterized in that** the second widened part is a nut (4b).
